# EUROPEAN PATENT SPECIFICATION

(11) **EP 2 798 321 B1**
(45) Date of publication and mention of the grant of the patent: **28.12.2016**
(21) Application number: 11808601.6
(22) Date of filing: 28.12.2011
(51) Int. Cl.: G01J 3/28

(54) **SPECTROSCOPIC INSTRUMENT AND PROCESS FOR SPECTRAL ANALYSIS**
SPEKTROSKOPISCHES INSTRUMENT UND SPEKTRALANALYSEVERFAHREN
INSTRUMENT SPECTROSCOPIQUE ET PROCESSUS POUR ANALYSE SPECTRALE

(43) Date of publication of application: 05.11.2014
(73) Proprietor: WaveLight GmbH, 91058 Erlangen (DE)
(72) Inventor: GORSCHBOTH, Claudia, 90411 Nürnberg (DE); JEGLORZ, Tobias, 90547 Stein (DE); MASSOW, Ole, 29303 Bergen (DE); WISWEH, Henning, 38376 Süpplingenburg (DE); VOGLER, Klaus, 90542 Eckental/Eschenau (DE)
(74) Representative: Katérle, Axel
(86) International application number: PCT/EP2011/006588
(87) International publication number: WO 2013/097874

(56) References cited:
- US-A1- 2011 102 802
- ZHILIN HU ET AL: "Fourier domain optical coherence tomography with a line ar-in-wavenumber spctrometer", OPTICS LETTERS, OSA, OPTICAL SOCIETY OF AMERICA, WASHINGTON, DC, US, vol. 32, no. 24, 15 December 2007 (2007-12-15), pages 3525-3527, XP001510145, ISSN: 0146-9592, DOI: 10.1364/OL.32.003525
- V. M. GELIKONOV ET AL: "Linear-wavenumber spectrometer for high-speed spectral-domain optical coherence tomography", OPTICS AND SPECTROSCOPY, vol. 106, no. 3, 1 March 2009 (2009-03-01) , pages 459-465, XP55028933, ISSN: 0030-400X, DOI: 10.1134/S0030400X09030242

## Description

The invention relates to a spectroscopic instrument, in particular an imaging system for a spectroscopic instrument, to a system for optical coherence tomography and also to a process for spectral analysis.

Optical coherence tomography (OCT for short) serves for two-dimensional and three-dimensional (2D and 3D for short) structural examination of a specimen. In so-called spectral-domain OCT (SD OCT for short) or in so-called frequency-domain OCT (FD OCT for short) a spectrally broadband, i.e. polychromatic, beam of light is analysed spectrally. For this purpose a spectroscopic instrument comes into operation. The beam of light is coupled into the spectroscopic instrument, is split up spectrally therein, and a spectral intensity distribution (a spectrum) I is registered with the aid of a sensor having several sensor elements. From this spectral intensity distribution I the spatial structure of the specimen being examined can then be inferred, and a one-dimensional (ID for short) tomogram of the specimen (a so-called A-scan) can be determined.

To determine an A-scan, the spectral intensity distribution I should be a distribution over the wavenumber k, i.e. I = I(k), whereby the periodicities arising herein (the so-called modulation frequencies) provide information about the spatial structure of the specimen directly. The modulation frequencies can readily be ascertained from the spectral intensity distribution if the intensity values thereof are available for various wavenumbers k that differ from one another by a fixed wavenumber range Δk (or a multiple thereof). This allows for imaging of the spectrum linearly over the wavenumber k.

However, in conventional spectroscopic instruments for measuring the spectral intensity distribution the spectrum is generally imaged onto the sensor in such a manner that intensity values are registered for various wavelengths λ that differ from one another substantially by a fixed wavelength range Δλ (or a multiple thereof). That is, the spectral intensity distribution is sampled linearly over the wavelength λ. Since the wavelength λ and the wavenumber k are connected to one another in non-linear manner via k = 2π/λ, the spectrum is accordingly available in non-linear form over k. For the determination of the modulation frequencies, a spectrum I(k) that is linear over k therefore has to be ascertained from the spectrum I(λ) that is linear over λ by suitable data processing. This procedure is called re-sampling. The re-sampling requires a certain computing-time, which renders difficult a rapid representation of the OCT signals, particularly when large amounts of data are being ascertained for the spectral intensity distribution. In addition, the re-sampilng is generally accompanied by a drop in sensitivity over the depth of measurement (i.e. a loss of quality in the signal-to-noise ratio, called SNR drop-off, SNR trade-off or sensitivity drop).

More extensive information on optical coherence tomography, particularly on spectral analysis in connection with optical coherence tomography, can be gathered from the following publications:
W. Drexler, J.G. Fujimoto: Optical Coherence Tomography: Technology and Applications, Springer Verlag, Berlin Heidelberg New York 2010;
V.M. Gelikonov, G.V. Gelikonov, P.A. Shilyagin: Linear-Wavenumber Spectrometer for High-Speed Spectral-Domain Optical Coherence Tomography, Optics and Spectroscopy, 106, 459-465, 2009;
V.M. Gelikonov, G.V. Gelikonov, P.A. Shilyagin: Linear wave-number spectrometer for spectral domain optical coherence tomography, Proc. SPIE 6847, 68470N, 2008;
Z. Hu, A.M. Rollins: Fourier domain optical coherence tomography with a linear-in-wavenumber spectrometer, Optics Letters, 32, 3525-3527, 2007.

Document US 2011/102802 A1 relates to a k-linear GRISM being a combination of a prism and a grating, in which the wavenumber dispersion of the prism balances the wavenumber dispersion of the grating. Alternatively, a chirped holographic grating can be tailored to replicate the transmission function of the GRISM.

It is an object of embodiments of the invention to specify a spectroscopic instrument, in particular an imaging system for a spectroscopic instrument, a system for optical coherence tomography and also a process for spectral analysis that enable a rapid ascertainment of tomograms of high image quality.

This object is achieved by a spectroscopic instrument according to claim 1 or 7, a system for optical coherence tomography according to claim 8, and a process for spectral analysis according to claim 9 or 10.

According to advantageous embodiments, a spectroscopic instrument includes a first optical component for spatial spectral splitting of a polychromatic beam of light impinging onto the first optical component, an objective, which routes various spectral regions of the split beam of light onto differing spatial regions, and also a sensor, situated downstream of the objective in the beam path of the beam of light, with a plurality of light-sensitive sensor elements, the sensor elements being arranged in the beam path of the split beam of light in such a manner that each sensor element registers the intensity of a spectral sector of the beam of light and the medians of the spectral sectors are situated equidistant from one another in the k-space, where k denotes the wavenumber. In other words: after passing through the first optical component and the objective, the spectrum of the polychromatic beam of light is imaged onto the sensor linearly over the wavenumber k .

Consequently the spectroscopic instrument itself provides a spectral intensity distribution that is linear over the wavenumber k. A later re-sampling of the raw data that have been output from the spectroscopic instrument is therefore not necessary. The proposed spectroscopic instrument consequently makes it possible for the time required for the extraction of an OCT tomogram to be reduced. In addition a loss of sensitivity, over the depth of measurement, due to the re-sampling, can be avoided and/or reduced.

The first optical component may take the form of a diffractive component. In particular, a diffractive component may take the form of a diffraction grating, a transmission grating, a reflection grating, a volume grating, a relief grating, an amplitude grating, a holographic grating and/or a Fresnel zone plate. The centres of diffraction of the diffractive component are constituted, in particular, by slits, grooves, slats, lands and/or Fresnel zones. The centres of diffraction of the first optical component may be arranged not equidistantly from one another, in particular, with a slightly variable reciprocal diffraction-centre spacing. In particular, the centres of diffraction of the first optical component are arranged with respect to one other in such a manner and/or the first optical component is arranged in relation to the incident beam of light in such a manner that the first optical component exhibits an angular dispersion dθ/dk, in the case of which the diffraction angle θ of the beam of light emerging from the first optical component in relation to the beam of light entering the first optical component depends on the wavenumber k. To the extent that it is a question of diffraction, only the first order of diffraction is understood in the following. The centres of diffraction may exhibit a slightly variable grating constant.

The first optical component may take the form of a dispersive component. A dispersive component may take the form of a wedge-shaped structure and/or a prism, in particular a dispersing prism and/or reflecting prism. The geometry (for instance, the refracting angle α), the material (for instance, glass) and/or the optical properties of the material (for instance, the refractive index n(k) and/or the dispersion dn/dk) of the prism may be selected in such a manner and/or the prism may be arranged in relation to the incident beam of light in such a manner that the first optical component exhibits an angular dispersion dθ/dk, in the case of which the deflection angle θ of the beam of light emerging from the first optical component in relation to the beam of light entering the first optical component depends on the wavenumber k.

The first optical component may take the form of a grating prism (a so-called grism). The grating prism may take the form of a modular unit consisting of a dispersive component (for instance, a prism) and a diffractive component (for instance, a diffraction grating). The modular unit may have been designed in such a way that the dispersive component and the diffractive component are arranged non-adjustably with respect to one another. For this purpose a plurality of centres of diffraction (for instance, by virtue of appropriate coating, vapour deposition, embossing, scoring or such like) may have been applied onto a surface of a prism. The geometry (for instance, the refracting angle α), the material (for instance, glass) and/or the optical properties of the material (for instance, the refractive index n(k) and/or the dispersion dn/dk) of the prism may be selected in such a manner and/or the centres of diffraction of the diffraction grating applied onto the prism may be arranged with respect to one another in such a manner and/or the grating prism may be arranged in relation to the incident beam of light in such a manner that the grating prism splits up the beam of light in accordance with an angular dispersion dθ/dk combined from a grating angular dispersion of the grating of the grating prism and from a prism angular dispersion of the prism of the grating prism, in the case of which the deflection angle θ of the beam of light emerging from the first optical component in relation to the beam of light entering the first optical component depends on the wavenumber k.

The objective may exhibit such properties that a collimated ray bundle, emanating from the first optical component on the object side, of the split beam of light is focused to a focus on the image side in such a manner after passing through the objective that a lateral spacing of the focus from an optical axis of the objective increases linearly with the angle of incidence with an increasing angle of incidence at which the collimated ray bundle is incident into the objective in relation to the optical axis of the objective.

The objective may be of rotationally symmetrical design. In particular, the objective may be of cylindrically symmetrical design with respect to its optical axis. The objective takes the form, in particular, of a flat-field scanning lens, an f-theta objective or a telecentric f-theta objective, in particular an f-theta objective that is telecentric on the image side. The objective may exhibit an entrance pupil located outside the objective. The objective may be arranged in relation to the first optical component in such a manner that the first optical component, but in particular also the point on the first optical component at which the split beam of light emerges from the first optical component, is located in the centre of the entrance pupil of the objective.

Alternatively or additionally, the objective exhibits distortion-burdened and/or lateral chromatic imaging properties. The objective may be adapted to route the beam of light split up by the first optical component in such a manner that medians, situated equidistant from one another in the k-space, of various spectral regions of the polychromatic beam of light are focused to differing foci, the centres of which are situated equidistant from one another in the configuration space.

For this purpose, by suitable selection of the glasses used within the objective for the refracting elements, in particular the material and/or shapes thereof, the objective may exhibit such distortion-burdened and/or lateral chromatic imaging properties that an extra-axial spacing, depending on the wavelength, results which obeys a non-linear function. In particular, this effect can be utilised by adjustment of the position and/or orientation of the objective in relation to the beam path of the beam of light split up by the first optical component in such a manner that the split beam of light is routed by the objective in such a manner that medians, situated equidistant from one another in the k-space, of various spectral sectors are focused to differing foci, the centres of which are situated equidistant from one another in the configuration space.

'Lateral' means along an axis oriented perpendicular to the optical axis of the objective. 'Chromatic' means dependent on the wavelength λ. 'Extra-axial' means in the lateral direction with non-vanishing spacing from the optical axis.

The objective may be arranged in relation to the first optical component in such a manner that the split beam of light passes through the objective substantially or exclusively above a plane in which an optical axis of the objective is situated. Additionally or alternatively, the objective may have been arranged in relation to the first optical component in such a manner that an optical axis of the objective has been tilted in relation to the direction of propagation of a wave train of the split beam of light that represents the median of the entire spectrum of the polychromatic beam of light in the k-space.

The spectroscopic instrument may include a second optical component taking the form of a dispersive and/or diffractive component, which has been combined with the objective so as to form a modular unit in such a manner that the objective and the second optical component are arranged non-adjustably with respect to one another. In particular, the second optical component may take the form of an objective attachment. The second optical component may have been arranged upstream of the objective in the beam path of the beam of light. Alternatively, the second optical component may have been arranged downstream of the objective in the beam path of the beam of light.

The first optical component, the objective, the sensor, the sensor elements, one of the modular units described above and/or all the further components of the spectroscopic instrument may have been formed as such on a base plate of the spectroscopic instrument in positionally adjustable manner with the aid of adjustment means provided for them, such as rails, sliding tables, bar linkage, posts, translation stages or rotating stages. In particular, the mutual positions and/or orientations of the first optical component, of the objective, of the sensor, of the sensor elements and/or of the modular unit amongst themselves are adjustable, in particular manually. The components of a modular unit, on the other hand, have been firmly connected to one another in advance in such a manner that the relative position and/or orientation thereof is non-adjustable.

Centres of the light-sensitive surfaces of the sensor elements of the sensor may be arranged equidistant from one another. Alternatively, the centres of the light-sensitive surfaces of the sensor elements of the sensor may have been arranged spatially in accordance with the foci or the centres of the foci onto which the objective focuses medians, situated equidistant from one another in the k-space, of various spectral regions of the polychromatic beam of light on the image side. In particular, the sensor may take the form of a CCD line sensor or CMOS line sensor wherein the centres of the light-sensitive surfaces of the sensor elements lie on a straight line. The light-sensitive surfaces of the sensor elements may have been designed to be of equal size or of differing size.

An imaging system for a spectroscopic instrument includes one of the first optical components described above, one of the objectives described above and/or one of the modular units described above.

A system for optical coherence tomography includes one of the spectroscopic instruments described above. The system further includes a light-source for making available coherent polychromatic light, and a beam-splitter that has been set up to couple the coherent polychromatic light into a reference arm and into a specimen arm, to superimpose the light back-scattered from the reference arm and from the specimen arm so as to form a polychromatic beam of light, and to couple the polychromatic beam of light into the spectroscopic instrument for the purpose of spectral analysis.

A process for spectral analysis comprises the steps of claim 9 or 10.

To the extent that a process or individual steps of a process for spectral analysis is/are described in this description, the process or individual steps of the process can be executed by an appropriately configured apparatus. Analogous remarks apply to the elucidation of the mode of operation of an apparatus that executes process steps. To this extent, apparatus features and process features of this description are equivalent. In particular, it is possible to realise the process or individual steps of the process with a computer on which an appropriate program according to the invention is executed.

The invention will be elucidated further in the following on the basis of the appended drawings, of which:
- Fig. 1: shows a schematic general representation of a system for optical coherence tomography according to one example.
- Fig. 2: shows a schematic representation of a spectroscopic instrument,
- Figs. 3a to 3e: show a schematic representation of a distribution of medians of various spectral regions,
- Figs. 4a and 4b: show an illustration of a spectrum that is linear over the wavelength λ and non-linear over the wavenumber k,
- Figs. 5a and 5b: show an illustration of a spectrum that is linear over the wavenumber k and non-linear over the wavelength λ,
- Fig. 6: shows a schematic representation of a spectroscopic instrument according to an example.
- Fig. 7: shows a schematic representation of a spectroscopic instrument according to a second example.
- Fig. 8: shows a schematic representation of a spectroscopic instrument according to a first embodiment of the invention.
- Fig. 9: shows a schematic represetation of a spectroscopic instrument according to a first embodiment of the invention.
- Figs. 10a and 10b: show a schematic representation of a spectroscopic instrument according to examples and
- Fig. 11: shows a schematic representation of a spectroscopic instrument according to a second embodiment of the invention.

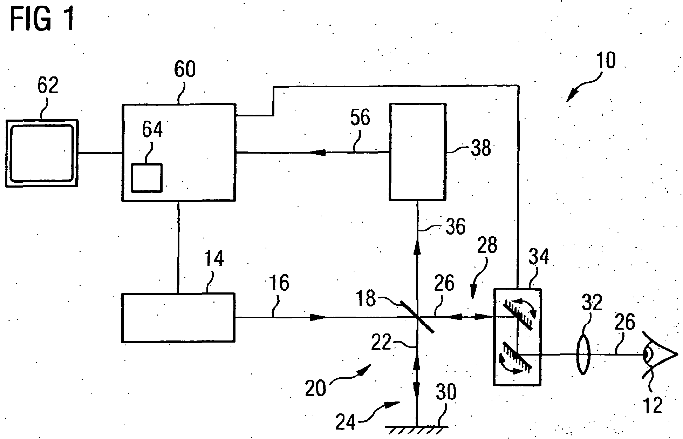

A system for optical coherence tomography is denoted generally in Fig. 1 by 10. The system 10 serves in the exemplary case for examining an object 12 shown in the form of a human eye. The optical coherence tomography is based on SD OCT or on FD OCT.

The system 10 includes a light-source 14 for emitting a coherent polychromatic beam of light 16. The light-source 14 emits a spectrum of coherent light that is broadband within the frequency space. The beam of light emitted from the light-source 14 is directed onto a beam-splitter 18. The beam-splitter 18 is a constituent part of an interferometer 20 and splits up the incident optical output of the beam of light 16 in accordance with a predetermined splitting ratio, for example 50:50. One ray bundle 22 runs within a reference arm 24; another ray bundle 26 runs within a specimen arm 28.

The ray bundle 22 branched off into the reference arm 24 impinges onto a mirror 30 which reflects the ray bundle 22 collinearly back onto the beam-splitter 18. A focusing optical train 32 and controllable scanning components 34 are provided within the specimen arm 28. The controllable scanning components 34 have been set up to route the ray bundle 26 coming in from the beam-splitter 18 through the focusing optical train 32 onto the object 12. In this connection the angle of incidence at which the ray bundle 26 coming from the beam-splitter 18 enters the focusing optical train 32 is adjustable with the aid of the scanning components 34. In the example shown in Fig. 1 the scanning components 34 have been designed for this purpose as rotatably supported mirrors. The axes of rotation of the mirrors may be perpendicular to one another. The angle of rotation of the mirrors is set, for example, with the aid of an element operating in accordance with the principle of a galvanometer. The focusing optical train 32 focuses the ray bundle 26 onto or into the object 12.

The ray bundle 26 back-scattered from the object 12 in the specimen arm 28 is superimposed at the beam-splitter 18 collinearly with the ray bundle 22 reflected back from the mirror 30 in the reference arm 24 so as to form a polychromatic beam of light 36. The optical path lengths in reference arm 24 and specimen arm 28 are substantially equally long, so that the beam of light 36 displays an interference between the ray bundles 22 and 26 back-scattered from reference arm 24 and specimen arm 28. A spectroscopic instrument or spectrometer 38 registers the spectral intensity distribution of the polychromatic beam of light 36.

Instead of the free-space setup represented in Fig. 1, the interferometer 20 may also have been realised partly or entirely with the aid of fibre-optic components. In particular, the beam-splitter 18 may take the form of a fibre-optic beam-splitter and the rays 16, 22, 26, 36 may be guided with the aid of fibres.

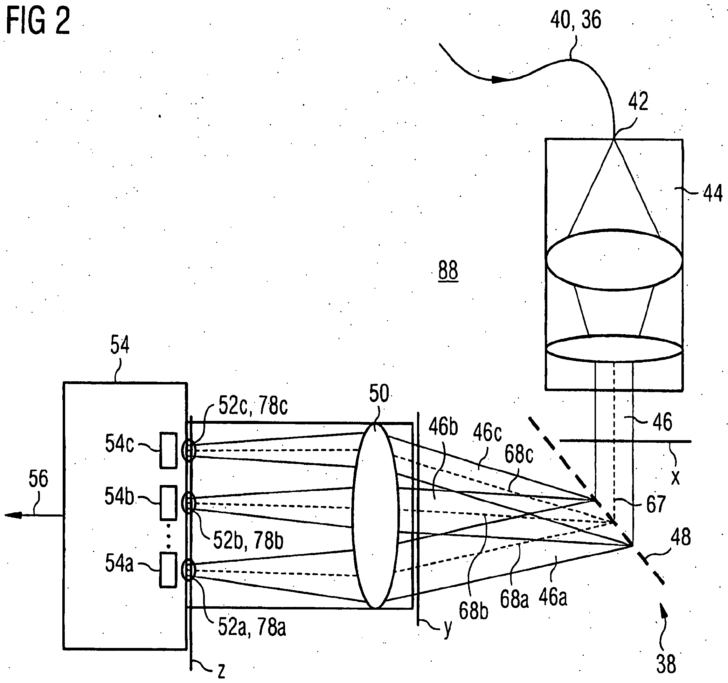

The spectroscopic instrument 38 is represented in more detail in Fig. 2. As can be seen in Fig. 2, the beam of light 36 coming from the beam-splitter 18 is coupled into the spectroscopic instrument 38 with the aid of a fibre 40. The fibre terminates in a collimator 44 via a fibre coupling 42. The collimator 44 may comprise several lenses and has been set up to collect the beam of light 36 emerging divergently from the fibre 40, to shape it into a collimated polychromatic beam of light 46 and to direct the latter onto a first optical component 48. For the purpose of a compact structural design between collimator 44 and first optical component 48, in the beam path of the beam of light 46 an additional deflecting mirror (not represented) may have been arranged which has been set up to route the collimated beam of light 46 onto the first optical component 48.

The first optical component 48 has been set up to split up the polychromatic beam of light 46 impinging onto the first optical component 48 spatially into the spectral constituents thereof. In exemplary manner the course of three collimated beams of light 46a, 46b, 46c of differing spectral regions of the split polychromatic beam of light 46 is represented. An objective 50 collects the beams of light 46a, 46b, 46c and directs the latter onto differing spatial regions 52a, 52b, 52c. The objective 50 may comprise several lenses. The objective 50 exhibits an entrance pupil (not represented) which is arranged in the beam path of the split beam of light 46a, 46b, 46c upstream of all the refracting surfaces of the objective 50. The objective 50 may be arranged in relation to the first optical component 48 in such a manner that the point on the first optical component 48 at which the split beam of light 46a, 46b, 46c emerges from the first optical component 48 is located in the centre of the entrance pupil of the objective 50.

Located downstream of the objective 50 in the beam path of the split beam of light 46a, 46b, 46c is a sensor 54 with a plurality of light-sensitive sensor elements 54a, 54b, 54c. In the example which is shown here, the sensor 54 takes the form of a CMOS camera or CCD camera (or line camera) which exhibits a plurality of pixels, for example 4096 pixels. The sensor elements 54a, 54b, 54c consequently represent the individual pixels of the camera 54. The sensor elements 54a, 54b, 54c are arranged in the beam path of the split beam of light 46a, 46b, 46c in such a manner that each sensor element 54a, 54b, 54c registers the intensity of a different spectral sector A₁, A₂, A₃ of the spectrum of the beam of light 46. The totality of the intensity values registered by the sensor elements 54a, 54b, 54c yield a spectral intensity distribution in the form of an output signal 56.

The output signal 56 generated by the spectroscopic instrument 38 is transferred to a control device 60; see Fig. 1. On the basis of the registered spectral intensity distribution the control device 60 ascertains a tomogram of the object 12. The control device 60 controls the scanning components 34 in such a manner that the extraction of 1D, 2D and/or 3D tomograms is possible. The ascertained tomograms are displayed on a display unit 62 and can be stored in a memory 64.

The collimated polychromatic beam of light 46 consists of a large number of wave trains propagating substantially in parallel. In the case of the wave trains, harmonic plane waves may be assumed for the sake of simplicity. Each wave train of the beam of light 46 is characterised by precisely one wave vector **k.** The direction/orientation of the wave vector k represents the direction of propagation of the wave train. The magnitude k of the vector **k,** called the wavenumber k, is a measure of the spatial spacing of two wavefronts within the wave train. The spatial periodicity of the wave train is reflected in the wavelength l. It holds that λ = (2π)/k.

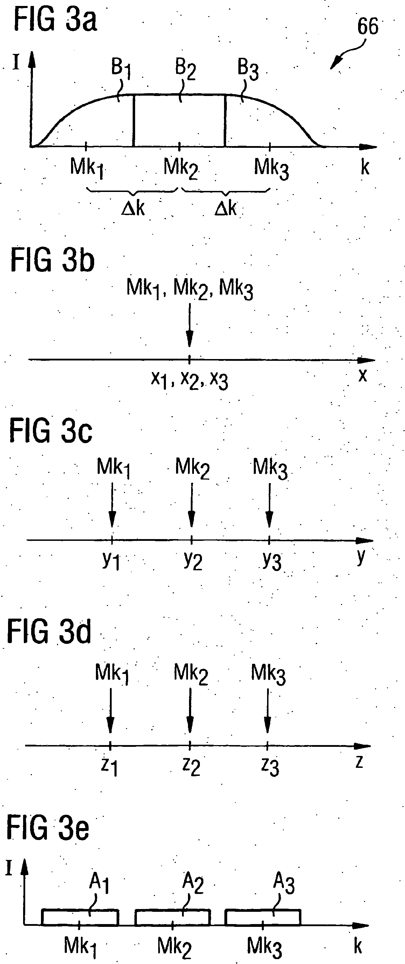

The spectrum 66 of the beam of light 46 is represented schematically in Fig. 3a. In exemplary manner the spectrum 66 in the k-space consists of three spectral regions B₁, B₂, B₃. By 'k-space' a straight line or axis is to be understood on which the wavenumbers k are ordered linearly by magnitude. Each region B₁, B₂, B₃ is characterised by a median Mk₁, Mk₂, Mk₃. Alternatively, however, for the following implementations (such as those using 4096 pixels), for example, different spectral regions with a corresponding number of medians may also be defined. In the following, median Mk₂ represents, at the same time, the median of the entire spectrum 66 in the k-space.

A median Mkᵢ (i = 1, 2, 3) in the k-space is determined as follows: If the wavenumbers k₁ to kₙᵢ arising within a spectral region Bᵢ (or spectral sector Aᵢ) are ordered by magnitude in a mathematical sequence, where nᵢ represents the number of wavenumbers within region Bᵢ (sector Aᵢ), then median Mkᵢ in the case nᵢ odd means the value at the (nᵢ+1/2)th place; in the case n even, it means the mean value derived from the values in the nᵢ/2th and (nᵢ/2+1)th places. For a continuous or quasi-continuous distribution of the wavenumbers k₁ to kₙᵢ within spectral region Bᵢ (sector Aᵢ), alternatively the median may be constituted by the mean value derived from k₁ and kₙᵢ, where k₁ represents the smallest wavenumber and kₙᵢ represents the largest wavenumber that arise within spectral region Bᵢ (sector Aᵢ). Corresponding remarks apply to the determination of a median in the λ-space.

Before the beam of light 46 impinges onto the first optical component 48, wave trains that are characterised by wavenumbers k₁, k₂, k₃ corresponding to the medians Mk₁, Mk₂, Mk₃ move substantially along the same path 67 represented in dashed manner in Fig. 2. The direction of the path 67 is determined from the direction of the wave vectors **k₁, k₂, k₃.** Accordingly, all three wave trains pass through the straight line x drawn in Fig. 2, which intersects the beam of light 46, at the same position x₁ = x₂ = x₃; see Fig. 3b.

After passing through the first optical component 48 the spectrum 66 has been split up spatially (for example, in accordance with a certain angular dispersion). The first optical component 48 changes, depending on the wavenumber k, the orientation of the wave vectors **k₁, k₂, k₃** but not the magnitudes thereof, i.e. the wavenumbers k₁, k₂, k₃ themselves. This means that the wave trains corresponding to the medians Mk₁, Mk₂, Mk₃ now move substantially along differing paths 68a, 68b, 68c, likewise represented in Fig. 2 as dashed lines. The direction of the paths 68a, 68b, 68c is determined from the respective directions of the wave vectors **k₁, k₂, k₃.** Therefore the three wave trains pass through the straight line y drawn in Fig. 2, which intersects the paths 68a, 68b, 68c, at differing positions y₁, y₂, y₃; see Fig. 3c.

The paths 68a, 68b, 68c can also be influenced/routed, in particular deflected, in the further course by the objective 50, so that the wave trains corresponding to the medians Mk₁, Mk₂, Mk₃ pass through the straight line z drawn in Fig. 2, which intersects the paths 68a, 68b, 68c routed by the objective 50, at different positions z₁, z₂, z₃; see also Fig. 3d.

By virtue of the routing of the wave trains along the paths 68a, 68b, 68c onto the sensor elements 54a, 54b, 54c, the spectrum 66 is imaged onto the sensor 54. The sensor elements 54a, 54b, 54c each register one of the spectral regions B₁, B₂, B₃ or (more generally) sectors A₁, A₂, A₃ of the spectral regions B₁, B₂, B₃; see Fig. 3e. It should be noted that the medians Mk₁, Mk₂, Mk₃ of the spectral regions B₁, B₂, B₃ may tally with the medians Mk₁, Mk₂, Mk₃ of the spectral sectors A₁, A₂, A₃ but do not necessarily have to tally therewith.

In conventional spectroscopic instruments 38 the individual sensor elements 54a, 54b, 54c of the sensor 54 are arranged in the beam path of the split beam of light 46, 46a, 46b, 46c in such a manner that the sensor elements 54a, 54b, 54c register spectral sectors A₁, A₂, A₃, the medians of which Mλ₁, Mλ₂, Mλ₃ in the λ-space are situated equidistant from one another or are situated at least non-linearly in the k-space.

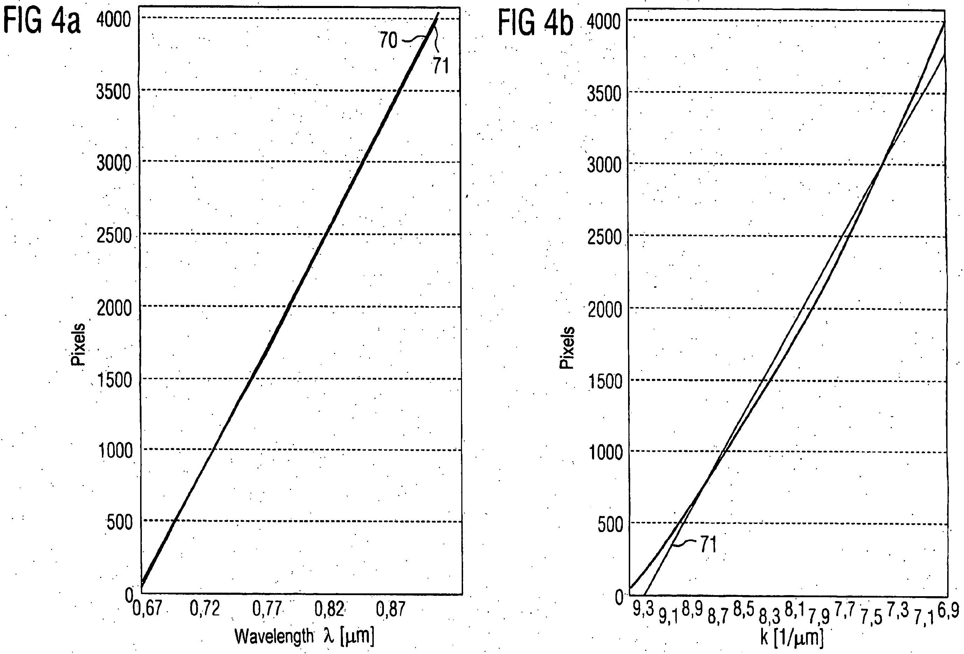

This state of affairs is represented more precisely in the diagrams in Figs. 4a and 4b. The vertical axis shows a continuous numbering of the sensor elements 54a, 54b, 54c, which in the example shown here begins at 1 and ends, by way of example, at 4096. The horizontal axis in Fig. 4a shows the wavelength λ of the medians Mλ₁, Mλ₂, Mλ₃ of the differing spectral sectors A₁, A₂, A₃ registered by the sensor elements 54a, 54b, 54c in units of µm. The curve 70 represented in Fig. 4a shows an approximately linear progression over the wavelength λ (for comparison, in addition a straight line 71 has been drawn in). The spectrum 66 is accordingly imaged onto the sensor 54 approximately linearly over λ.

On the other hand, this signifies, by reason of the non-linear relationship k = 2π/λ between the wavenumber k and the wavelength λ, that in the case of conventional spectroscopic instruments 38 the spectrum 66 of the polychromatic beam of light 46 is imaged onto the sensor 54 non-linearly over the wavenumber k. This is made clear by the diagram in Fig. 4b, which was calculated with the aid of the above formula from the data of the diagram from Fig. 4a and in which the horizontal axis shows the wavenumber k of the medians Mk₁, Mk₂, Mk₃ of the differing spectral sectors A₁, A₂, A₃ registered by the sensor elements 54a, 54b, 54c in units of 1/µm (for comparison, in addition a straight line 71 has been drawn in).

In the case of the spectroscopic instrument 38 according to the invention the sensor elements 54a, 54b, 54c of the sensor 54 are arranged in the beam path of the split beam of light 46a, 46b, 46c in such a manner that the medians Mk₁, Mk₂, Mk₃ of the spectral sectors A₁, A₂, A₃ of the spectrum 66 of the beam of light 46 registered by the sensor elements 54a, 54b, 54c are situated equidistant from one another in the k-space.

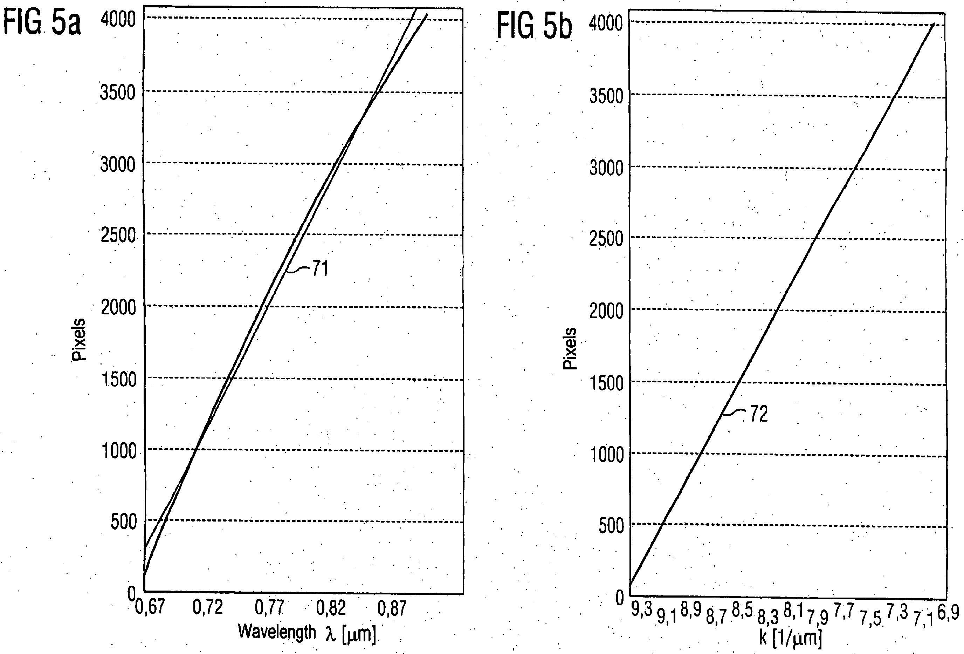

This state of affairs is again represented in Fig. 5b. The vertical axis again shows a continuous numbering of the sensor elements 54a, 54b, 54c from 1 to 4096. The horizontal axis shows the wavenumber k of the medians Mk₁, Mk₂, Mk₃ of the differing spectral sectors A₁, A₂, A₃ registered by the sensor elements 54a, 54b, 54c in units of 1/µm. Within a range from 6.9/µm to 9.3/µm which is shown in exemplary manner the curve 72 shows a linear progression over the wavenumber k. The spectrum 66 of the polychromatic beam of light 46 is accordingly imaged onto the sensor 54 linearly over the wavenumber k. Fig. 5a shows the calculated progression, resulting from Fig. 5b, over the wavelength. λ, which is non-linear (for comparison, in addition a straight line 71 has been drawn in).

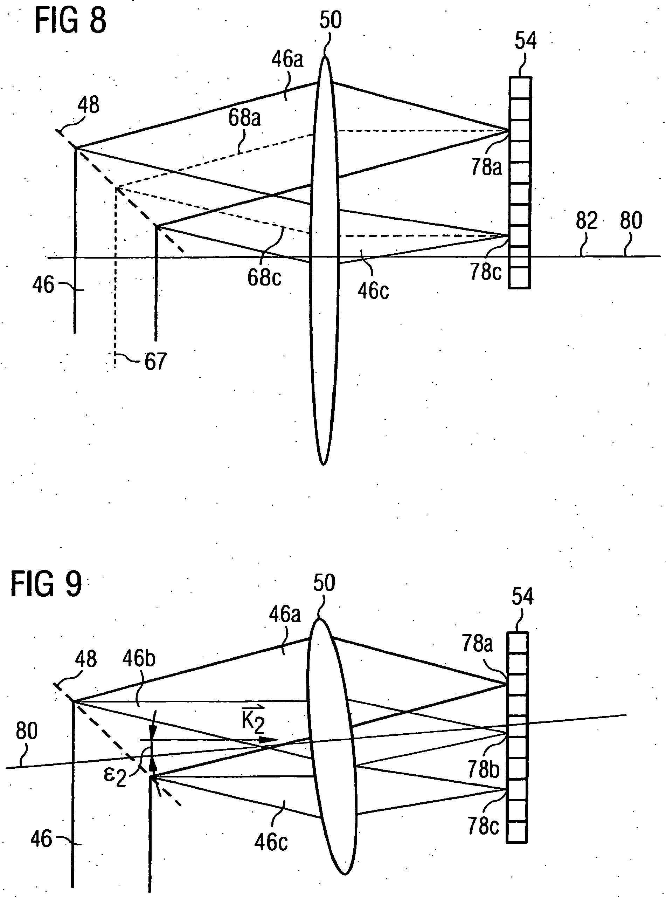

In Figs. 8, 9 and 11 various embodiments of the spectroscopic instrument 38 according to the invention are represented. Merely for better clarity, in some of these cases only two beams of light 46a and 46c have been represented, but not the exemplary third beam of light 46b. Beam of light 46a (46b or 46c) represents a wave train that is characterised by a wavenumber k₁ (k₂ or k₃) that corresponds to the median Mk₁ (Mk₂ or Mk₃) of spectral region B₁ (B₂ or B₃). It holds that Mk₁ < Mk₂ < Mk₃.

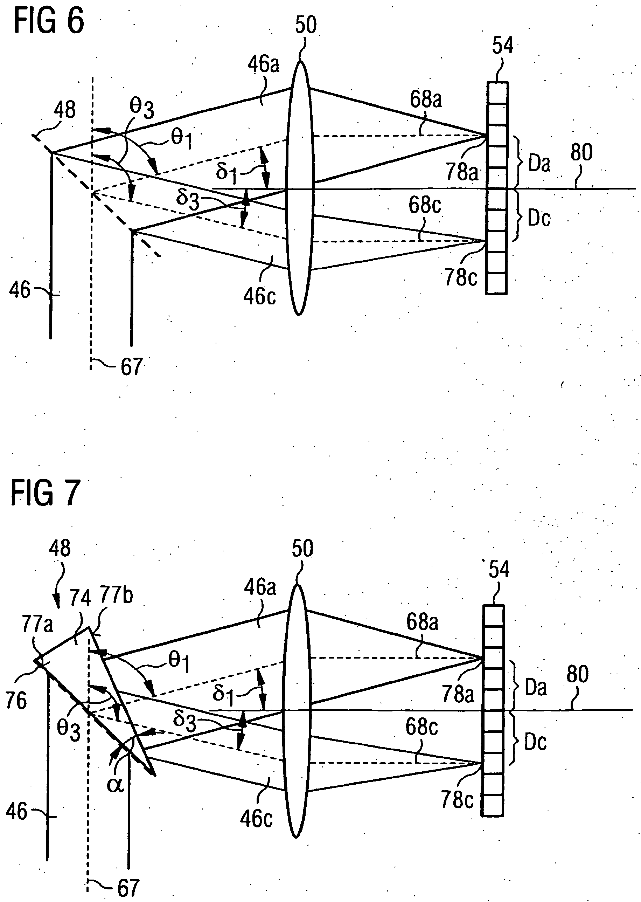

In a first example, represented in Fig. 6, the first optical component 48 takes the form of a diffraction grating. The centres of diffraction of the diffraction grating 48 are arranged with respect to one another in such a manner and the diffraction grating 48 is oriented in relation to the incident beam of light 46 in such a manner that the first optical component 48 exhibits an angular dispersion dθ/dk, in the case of which the diffraction angle θ of the beam of light 46a, 46c emerging from the first optical component 48 in relation to the beam of light 46 entering the first optical component 48 depends linearly on the

wavenumber k, i.e. dθ/dk = constant. Accordingly it holds that θ₁/k₁ = θ₃/k₃, where θ₁ is the diffraction angle by which beam of light 46a is deflected and θ₃ is the diffraction angle by which beam of light 46c is deflected.

In a second example, represented in Fig. 7, the first optical component 48 takes the form of a grating prism and includes a prism 74 and a diffraction grating 76 with a plurality of centres of diffraction, which has been applied onto an entrance face 77a of the prism 74. Alternatively, the diffraction grating 76 may also have been applied onto an exit face 77b of the prism 74. The refracting angle α, the material and the refractive index n(k) of the material of the prism 74 have been selected in such a manner, the centres of diffraction of the diffraction grating 76 have been arranged with respect to one another in such a manner and also the grating prism 48 has been oriented in relation to the incident beam of light 46 in such a manner that the grating prism 48 splits the beam of light 46 in accordance with an angular dispersion dθ/dk combined from a prism angular dispersion of the prism 76 and from a grating angular dispersion of the grating 74, in the case of which the deflection angle θ of the beam of light 46a, 46c emerging from the grating prism 48 in relation to the beam of light 46 entering the grating prism 48 depends linearly on the wavenumber k, i.e. dθ/dk = constant. Consequently, here too it holds that θ₁/k₁ = θ₃/k₃, where θ₁ is the diffraction angle by which beam of light 46a is deflected and θ₃ is the diffraction angle by which beam of light 46c is deflected.

The objective 50 of the first and second examples shown in Figs. 6 and 7 has such properties that a substantially collimated ray bundle 46a or 46c of the split beam of light 46 emanating from the first optical component 48 on the object side is focused to a focus 78a, 78c on the image side in such a manner after passing through the objective 50 that a lateral spacing Dₐ, D_{c} of the focus 78a, 78c from an optical axis 80 of the objective 50 increases linearly with the angle of incidence δ₁, δ₃ with an increasing angle of incidence δ₁, δ₃ at which the ray bundle 46a, 46c is incident into the objective 50 in relation to the optical axis 80. For this purpose the objective takes the form, for example, of an f-theta objective.

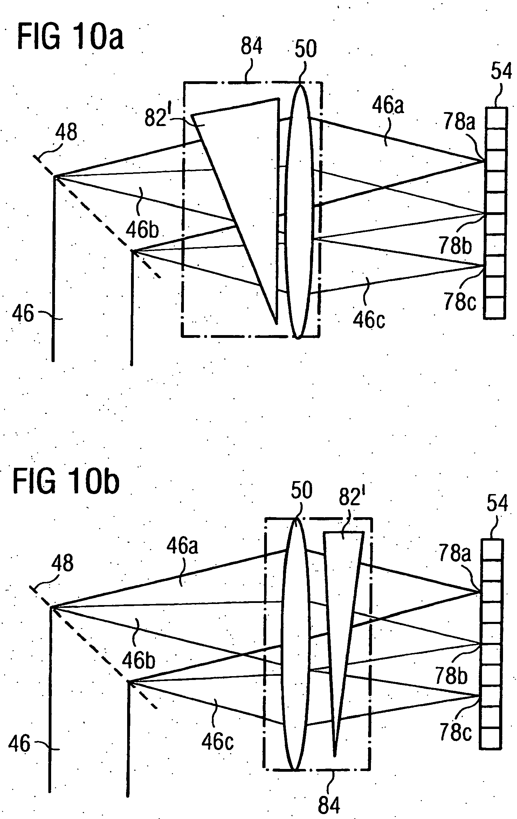

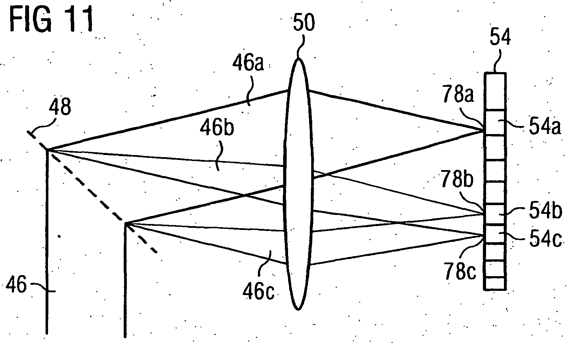

In Figs 8 and 9 a first embodiment of the invention is shown. In Figs 10a and 10b examples are slown. In Fig. 11 a second embodiment of the invention is shown.

In Figs. 8, 9, 10a, 10b and 11. In these embodiments and examples the first optical component 48 takes the form, for example, of a conventional diffraction grating with centres of diffraction arranged spatially equidistant from one another, or of a conventional dispersing prism. The first optical component 48 exhibits an angular dispersion dθ/dk, in the case of which the diffraction angle θ of the beam of light 46a, 46c emerging from the first optical component 48 in relation to the beam of light 46 entering the first optical component 48 depends non-linearly on the wavenumber k, i.e. dθ/dk ≠ constant.

In the first embodiment and in the examples of Figs 10a and 10b the objective 50 exhibits such imaging properties that the beam of light 46a, 46b, 46c split up by the first optical component 48 is routed by the objective 50 in such a manner that medians Mk₁, Mk₂, Mk₃, situated equidistant from one another in the k-space, of various spectral regions B₁, B₂, B₃ are focused to differing foci 78a, 78b, 78c, the centres of which are situated equidistant from one another in the configuration space; see, for example, Figs. 9, 10a and 10b. So the objective 50 routes the beams of light 46a, 46b, 46c to positions z₁, z₂, z₃ along the straight line z shown in Fig. 2, which intersects the beam path of the split beam of light 46a, 46b, 46c routed by the objective 50, that are situated spatially equidistant from one another; see Fig. 3d. For this purpose the objective 50 exhibits such properties that the routing of a beam of light 46a, 46b, 46c depends on the wavenumber k thereof.

In Figs. 8 and 9 the first embodiment of the invention is represented. In these cases, by virtue of suitable selection of the glasses that are used within the objective 50 for the refracting elements the objective 50 exhibits lateral chromatic imaging properties. These lateral chromatic imaging properties are such that an extra-axial spacing results, depending on the wavelength, that obeys a non-linear function. This effect is utilised by adjustment of the position and/or orientation of the objective 50 in relation to the beam path of the split beam of light 46a, 46b, 46c in such a manner that the split beam of light 46a, 46b, 46c is routed by the objective 50 in such a manner that medians Mk₁, Mk₂, Mk₃, situated equidistant from one another in the k-space, of various spectral regions B₁, B₂, B₃ are focused to differing foci 78a, 78b, 78c, the centres of which are situated equidistant from one another in the configuration space. The adjustment is effected by decentring and/or tilting the objective 50.

In the first embodiment, in Fig. 8, a decentring of the objective 50 can be seen. The objective 50 is arranged in relation to the first optical component 48 in such a manner that the split beam of light 46a, 46c passes through the objective 50 substantially above a plane 82 in which the optical axis 80 of the objective 50 is situated.

In the first embodiment, in Fig. 9, a tilting of the objective 50 can be seen. The objective 50 is arranged in relation to the first optical component 48 in such a manner that the optical axis 80 of the objective 50 is tilted in relation to the direction of propagation **k₂** of a wave train of the split beam of light 46b that represents the median Mk₂ of the spectrum 66 of the polychromatic beam of light 46 in the k-space. The angle ε₂ shown in Fig. 9 between the optical axis 80 and the direction of propagation **k₂** is consequently different from zero.

In Figs. 10a and 10b examples are shown. In these cases the spectroscopic instrument 38 includes a second optical component 82' taking the form of a prism, which has been combined with the objective 50 so as to form a modular unit 84 in such a manner that the objective 50 and the second optical component 82' are arranged non-adjustably with respect to one another. Alternatively, the second optical component 82' may take the form of a wedge-shaped optical element. The second optical component 82' and the objective exhibit, in combination, such properties that the split beam of light 46a, 46b, 46c is routed in such a manner upon passing through the modular unit 84 that medians Mk₁, Mk₂, Mk₃, situated equidistant from one another in the k-space, of various spectral regions B₁, B₂, B₃ of the spectrum 66 of the beam of light 46 are focused to differing foci 78a, 78b, 78c, the centres of which are situated equidistant from one another in the configuration space.

In Fig. 10a the second optical component 82' is arranged upstream of the objective 50 in the beam path of the beam of light 46a, 46b, 46c. In this case the second optical component 82' takes the form of an objective attachment. In Fig. 10b, on the other hand, the second optical component 82' is arranged downstream of the objective 50 in the beam path of the beam of light 46a, 46b, 46c.

The first optical component 48, the objective 50, the sensor 54, the sensor elements 54a, 54b, 54c, the modular unit denoted by 84 and/or all the further components 40, 42, 44 of the spectroscopic instrument 38 may have been formed as such on a base plate 88 of the spectroscopic instrument 38 in positionally adjustable manner with the aid of adjustment means 86 provided for them, such as rails, sliding tables, bar linkage, mirror posts, translation stages or rotating stages. In particular, the mutual positions and/or orientations of the first optical component 48, of the objective 50, of the sensor 54, of the sensor elements 54a, 54b, 54c and/or of the modular unit 84 amongst one another are adjustable, in particular manually. On the other hand, components 74 and 76 or 50 and 82' of the modular units 48 and 84, respectively, have been firmly connected to one another in advance in such a manner that the relative position and/or orientation thereof is/are non-adjustable.

In the first embodiment and in the examples shown in Figs. 6 to 10b the light-sensitive surfaces of the sensor elements 54a, 54b, 54c of the sensor 54 are designed to be equally large. Furthermore, the centres of the light-sensitive surfaces are arranged equidistant from one another in the configuration space.

In Fig. 11 a second embodiment of the spectroscopic instrument 38 is shown. In this case the objective 50 takes the form of a conventional objective. The objective 50 exhibits such imaging properties that the beam of light 46a, 46b, 46c split up by the first optical component 48 is routed by the objective 50 in such a manner that medians Mk₁, Mk₂, Mk₃, situated equidistant from one another in the k-space, of various spectral regions B₁, B₂, B₃ are focused to differing foci 78a, 78b, 78c, the centres of which are situated in non-equidistant manner with respect to one another in the configuration space. On the other hand, in this embodiment the centres of the light-sensitive surfaces of the light-sensitive elements 54a, 54b, 54c of the sensor 54 are arranged in accordance with the foci 78a, 78b, 78c to which the objective 50 focuses medians Mk₁, Mk₂, Mk₃, situated equidistant from one another in the k-space, of various spectral regions B₁, B₂, B₃ on the image side. In this connection the centres of the light-sensitive surfaces of the sensor elements 54a, 54b, 54c are situated in non-equidistant manner with respect to one another in the configuration space. The light-sensitive surfaces of the sensor elements 54a, 54b, 54c are variably large.

## Claims

1. Spectroscopic instrument (38), including:
a first optical component (48) configured to spatially spectrally split a polychromatic beam of light (46) impinging onto the first optical component (48),
wherein the first optical component (48) exhibits an angular dispersion (dθ/dk), in the case of which a diffraction angle (θ) of the beam of light (46a, 46c) emerging from the first optical component (48) in relation to the beam of light (46) entering the first optical component (48) depends non-linearly on the wavenumber (k),
an objective (50) configured to route various spectral regions (B₁, B₂, B₃) of the split beam of light (46a, 46b, 46c) onto differing spatial regions (52a, 52b, 52c), wherein the objective (50) is arranged in relation to the first optical component (48) in such a manner that the first optical component (48) is located at the centre of an entrance pupil of the objective (50), and wherein the objective (50) is configured to route the beam of light (46a, 46b, 46c) split by the first optical component in such a manner that medians (Mk₁, Mk₂, Mk₃), situated equidistant from one another in the k-space, of various spectral regions (B₁, B₂, B₃) are focused to differing foci (78a, 78b, 78c), the centres of which are situated equidistant from one another in the configuration space, and
a sensor (54), situated downstream of the objective (50) in the beam path of the split beam of light (46a, 46b, 46c), with a plurality of light-sensitive sensor elements (54a, 54b, 54c),
the sensor elements (54a, 54b, 54c) being arranged in the beam path of the split beam of light (46a, 46b, 46c), each sensor element (54a, 54b, 54c) configured to register the intensity of a spectral sector (A₁, A₂, A₃) of the beam of light (46) and the medians (Mk₁, Mk₂, Mk₃) of the spectral sectors (A₁, A₂, A₃) are situated equidistant from one another in the k-space, where k denotes the wavenumber.

2. Spectroscopic instrument (38) according to Claim 1, wherein the objective (50) is exhibits lateral chromatic imaging properties.

3. Spectroscopic instrument (38) according to Claim 1 or 2, wherein the objective (50) is arranged in relation to the first optical component (48) in such a manner that the split beam of light (46a, 46b, 46c) passes through the objective (50) substantially above a plane (82) in which an optical axis (80) of the objective (50) is situated.

4. Spectroscopic instrument (38) according to one of Claims 1 to 3, wherein the objective (50) is arranged in relation to the first optical component (48) in such a manner that an optical axis (80) of the objective (50) is tilted in relation to the direction of propagation **(k₂)** of a wave train of the split beam of light (46b) that represents the median (Mk₂) of the entire spectrum (66) of the beam of light (46) in the k-space.

5. Spectroscopic instrument (38) according to one of Claims 1 to 4, wherein the objective (50) is configured to focus a substantially collimated ray bundle (46a, 46b, 46c) of the split beam of light (46) emanating from the first optical component (48) on the object side to a focus (78a, 78b, 78c) on the image side after passing through the objective (50), a lateral spacing (Dₐ, D_{c}) of the focus (78a, 78b, 78c) from an optical axis (80) of the objective (50) increasing linearly with the angle of incidence (δ₁, δ₃) with an increasing angle of incidence (δ₁, δ₃) at which the ray bundle (46a, 46c) is incident into the objective (50) in relation to the optical axis (80) of the objective (50).

6. Spectroscopic instrument according to one of the preceding claims, wherein centres of the light-sensitive surfaces of the sensor elements of the sensor are arranged equidistant from one another.

7. Spectroscopic instrument (38), including:
a first optical component (48) configured to spatially spectrally split a polychromatic beam of light (46) impinging onto the first optical component (48),
wherein the first optical component (48) exhibits an angular dispersion (dθ/dk), in the case of which a diffraction angle (θ) of the beam of light (46a, 46c) emerging from the first optical component (48) in relation to the beam of light (46) entering the first optical component (48) depends non-linearly on the wavenumber (k),
an objective (50) configured to route various spectral regions (B₁, B₂, B₃) of the split beam of light (46a, 46b, 46c) onto differing spatial regions (52a, 52b, 52c), wherein the objective (50) exhibits such imaging properties that that the beam of light (46a, 46b, 46c) split up by the first optical component (48) is routed by the objective (50) in such a manner that medians (Mk₁, Mk₂, Mk₃), situated equidistant from one another in the k-space, of various spectral regions (B₁, B₂,
B₃) are focused to differing foci (78a, 78b, 78c), the centres of which are situated in non-equidistant manner with respect to one another in the configuration space, and
a sensor (54), situated downstream of the objective (50) in the beam path of the split beam of light (46a, 46b, 46c), with a plurality of light-sensitive sensor elements (54a, 54b, 54c),
the sensor elements (54a, 54b, 54c) being arranged in the beam path of the split beam of light (46a, 46b, 46c), each sensor element (54a, 54b, 54c) configured to register the intensity of a spectral sector (A₁, A₂, A₃) of the beam of light (46) and the medians (Mk₁, Mk₂, Mk₃) of the spectral sectors (A₁, A₂, A₃) are situated equidistant from one another in the k-space, where k denotes the wavenumber, wherein centres of the light-sensitive surfaces of the sensor elements (54a, 54b, 54c) of the sensor (54) are arranged spatially in accordance with the centres of the foci (78a, 78b, 78c) to which the objective (50) focuses medians (Mk₁, Mk₂, Mk₃), situated equidistant from one another in the k-space, of various spectral regions (B₁, B₂, B₃) on the image side.

8. System (10) for optical coherence tomography (OCT), comprising:
a spectroscopic instrument (38) according to one of Claims 1 to 7,
a light-source (14) configured to provide coherent polychromatic light (16),
a beam-splitter (18) configured to couple the coherent polychromatic light (16) into a reference arm (24) and into a specimen arm (28), to superimpose the light (22, 26) back-scattered from the reference arm (24) and from the specimen arm (28) so as to form a polychromatic beam of light (36), and to couple the polychromatic beam of light (36) into the spectroscopic instrument (38) for the purpose of spectral analysis.

9. Process for spectral analysis, comprising the following steps:
spatial spectral splitting of a polychromatic beam of light (46) impinging onto a first optical component (48),
wherein the first optical component (48) exhibits an angular dispersion (dθ/dk),
in the case of which a diffraction angle (θ) of the beam of light (46a, 46c) emerging from the first optical component (48) in relation to the beam of light (46) entering the first optical component (48) depends non-linearly on the wavenumber (k),
routing a plurality of spectral regions (B₁, B₂, B₃) of the split beam of light (46a, 46b, 46c) onto a plurality of differing spatial regions (52a, 52b, 52c) with the aid of an objective (50),
wherein the objective (50) is arranged in relation to the first optical component (48) in such a manner that the first optical component (48) is located at the centre of an entrance pupil of the objective (50), and
wherein the objective (50) is configured to route the beam of light (46a, 46b, 46c) split by the first optical component in such a manner that medians (Mk₁, Mk₂, Mk₃), situated equidistant from one another in the k-space, of various spectral regions (B₁, B₂, B₃) are focused to differing foci (78a, 78b, 78c), the centres of which are situated equidistant from one another in the configuration space, and
registering one or more intensities of the split beam of light (46a, 46b, 46c) with the aid of a sensor (54) arranged downstream of the objective (50) in the beam path of the beam of light (46a, 46b, 46c) with a plurality of light-sensitive sensor elements (54a, 54b, 54c), each sensor element (54a, 54b, 54c) configured to register the intensity of a spectral sector (A₁, A₂, A₃) of the beam of light (46) and the medians (Mk₁, Mk₂, Mk₃) of the spectral sectors (A₁, A₂, A₃) are situated equidistant from one another in the k-space, where k denotes the wavenumber.

10. Process for spectral analysis, comprising the following steps:
spatial spectral splitting of a polychromatic beam of light (46) impinging onto a first optical component (48),
wherein the first optical component (48) exhibits an angular dispersion (dθ/dk),
in the case of which a diffraction angle (θ) of the beam of light (46a, 46c) emerging from the first optical component (48) in relation to the beam of light (46) entering the first optical component (48) depends non-linearly on the wavenumber (k),
routing a plurality of spectral regions of the split beam of light (46a, 46b, 46c) onto a plurality of differing spatial regions (52a, 52b, 52c) with the aid of an objective (50),
wherein the objective (50) exhibits such imaging properties that that the beam of light (46a, 46b, 46c) split up by the first optical component (48) is routed by the objective (50) in such a manner that medians (Mk₁, Mk₂, Mk₃), situated equidistant from one another in the k-space, of various spectral regions (B₁, B₂, B₃) are focused to differing foci (78a, 78b, 78c), the centres of which are situated in non-equidistant manner with respect to one another in the configuration space, and
registering one or more intensities of the split beam of light (46a, 46b, 46c) with the aid of a sensor (54) arranged downstream of the objective (50) in the beam path of the beam of light (46a, 46b, 46c) with a plurality of light-sensitive sensor elements (54a, 54b, 54c), each sensor element (54a, 54b, 54c) configured to register the intensity of a spectral sector (A₁, A₂, A₃) of the beam of light (46) and the medians (Mk₁, Mk₂, Mk₃) of the spectral sectors (A₁, A₂, A₃) are situated equidistant from one another in the k-space, where k denotes the wavenumber, wherein centres of the light-sensitive surfaces of the sensor elements (54a, 54b, 54c) of the sensor (54) are arranged spatially in accordance with the centres of the foci (78a, 78b, 78c) to which the objective (50) focuses medians (Mk₁, Mk₂, Mk₃), situated equidistant from one another in the k-space, of various spectral regions (B₁, B₂, B₃) on the image side.

## Patentansprüche

1. Spektroskopisches Instrument (38), Folgendes beinhaltend:
eine erste optische Komponente (48), die konfiguriert ist, ein polychromatisches Lichtbündel (46), das auf die erste optische Komponente (48) auftrifft, räumlich spektral zu teilen,
wobei die erste optische Komponente (48) eine Winkeldispersion (dθ/dk) aufweist, in deren Fall ein Beugungswinkel (θ) des Lichtbündels (46a, 46c), das aus der ersten optischen Komponente (48) austritt, im Verhältnis zu dem Lichtbündel (46), das in die erste optische Komponente (48) eintritt, nichtlinear von der Kreiswellenzahl (k) abhängt,
ein Objektiv (50), das konfiguriert ist, verschiedene Spektralbereiche (B₁, B₂, B₃) des geteilten Lichtbündels (46a, 46b, 46c) in verschiedene räumliche Bereiche (52a, 52b, 52c) zu leiten, wobei das Objektiv (50) im Verhältnis zur ersten optischen Komponente (48) auf eine solche Weise angeordnet ist, dass die erste optische Komponente (48) im Zentrum einer Eingangspupille des Objektivs (50) lokalisiert ist, und
wobei das Objektiv (50) konfiguriert ist, das Lichtbündel (46a, 46b, 46c), das durch die erste optische Komponente geteilt wurde, auf eine solche Weise zu leiten, dass Mediane (Mk₁, Mk₂, Mk₃) verschiedener Spektralbereiche (B₁, B₂, B₃), die im k-Raum äquidistant zueinander liegen, in verschiedenen Brennpunkten (78a, 78b, 78c) fokussiert werden, deren Zentren im Konfigurationsraum äquidistant zueinander liegen, und
einen Sensor (54), der dem Objektiv (50) nachfolgend im Bündelpfad des geteilten Lichtbündels (46a, 46b, 46c) liegt, mit mehreren lichtempfindlichen Sensorelementen (54a, 54b, 54c),
wobei die Sensorelemente (54a, 54b, 54c) im Bündelpfad des geteilten Lichtbündels (46a, 46b, 46c) angeordnet sind, wobei jedes Sensorelement (54a, 54b, 54c) konfiguriert ist, die Intensität eines Spektralabschnitts (A₁, A₂, A₃) des Lichtbündels (46) zu registrieren, und die Mediane (Mk₁, Mk₂, Mk₃) der Spektralabschnitte (A₁, A₂, A₃) im k-Raum äquidistant zueinander liegen, wobei k die Kreiswellenzahl bezeichnet.

2. Spektroskopisches Instrument (38) nach Anspruch 1, wobei das Objektiv (50) laterale chromatische Abbildungseigenschaften aufweist.

3. Spektroskopisches Instrument (38) nach Anspruch 1 oder 2, wobei das Objektiv (50) im Verhältnis zur ersten optischen Komponente (48) auf eine solche Weise angeordnet ist, dass das geteilte Lichtbündel (46a, 46b, 46c) im Wesentlichen oberhalb einer Ebene (82), in der eine optische Achse (80) des Objektivs (50) liegt, das Objektiv (50) durchläuft.

4. Spektroskopisches Instrument (38) nach einem der Ansprüche 1 bis 3, wobei das Objektiv (50) im Verhältnis zur ersten optischen Komponente (48) auf eine solche Weise angeordnet ist, dass eine optische Achse (80) des Objektivs (50) im Verhältnis zu der Propagationsrichtung (**k**₂) eines Wellenzuges des geteilten Lichtbündels (46b), das den Median (Mk₂) des gesamten Spektrums (66) des Lichtbündels (46) im k-Raum repräsentiert, geneigt ist.

5. Spektroskopisches Instrument (38) nach einem der Ansprüche 1 bis 4, wobei das Objektiv (50) konfiguriert ist, ein im Wesentlichen kollimiertes Strahlenbündel (46a, 46b, 46c) des geteilten Lichtbündels (46) auf der Objektseite, das aus der ersten optischen Komponente (48) austritt, in einem Brennpunkt (78a, 78b, 78c) auf der Bildseite nach dem Durchlaufen des Objektivs (50) zu fokussieren, wobei ein lateraler Abstand (Dₐ, D_{c}) des Brennpunkts (78a, 78b, 78c) von einer optischen Achse (80) des Objektivs (50) linear mit dem Einfallswinkel (δ₁, δ₃) zunimmt, mit einem zunehmenden Einfallswinkel (δ₁, δ₃), mit dem das Strahlenbündel (46a, 46c) im Verhältnis zu der optischen Achse (80) des Objektivs (50) in das Objektiv (50) einfällt.

6. Spektroskopisches Instrument nach einem der vorhergehenden Ansprüche, wobei Zentren der lichtempfindlichen Oberflächen der Sensorelemente des Sensors äquidistant zueinander angeordnet sind.

7. Spektroskopisches Instrument (38), Folgendes beinhaltend:
eine erste optische Komponente (48), die konfiguriert ist, ein polychromatisches Lichtbündel (46), das auf die erste optische Komponente (48) auftrifft, räumlich spektral zu teilen,
wobei die erste optische Komponente (48) eine Winkeldispersion (dθ/dk) aufweist, in deren Fall ein Beugungswinkel (θ) des Lichtbündels (46a, 46c), das aus der ersten optischen Komponente (48) austritt, im Verhältnis zu dem Lichtbündel (46), das in die erste optische Komponente (48) eintritt, nichtlinear von der Kreiswellenzahl (k) abhängt,
ein Objektiv (50), das konfiguriert ist, verschiedene Spektralbereiche (B₁, B₂, B₃) des geteilten Lichtbündels (46a, 46b, 46c) in verschiedene räumliche Bereiche (52a, 52b, 52c) zu leiten, wobei das Objektiv (50) solche Abbildungseigenschaften aufweist, dass das Lichtbündel (46a, 46b, 46c), das durch die erste optische Komponente (48) aufgeteilt wurde, von dem Objektiv (50) auf eine solche Weise geleitet wird, dass Mediane (Mk₁, Mk₂, Mk₃), die im k-Raum äquidistant zueinander liegen, verschiedener Spektralbereiche (B₁, B₂, B₃) in verschiedenen Brennpunkten (78a, 78b, 78c) fokussiert werden, deren Zentren im Konfigurationsraum auf nichtäquidistante Weise zueinander liegen, und
einen Sensor (54), der dem Objektiv (50) nachfolgend im Bündelpfad des geteilten Lichtbündels (46a, 46b, 46c) liegt, mit mehreren lichtempfindlichen Sensorelementen (54a, 54b, 54c),
wobei die Sensorelemente (54a, 54b, 54c) im Bündelpfad des geteilten Lichtbündels (46a, 46b, 46c) angeordnet sind, wobei jedes Sensorelement (54a, 54b, 54c) konfiguriert ist, die Intensität eines Spektralabschnitts (A₁, A₂, A₃) des Lichtbündels (46) zu registrieren, und die Mediane (Mk₁, Mk₂, Mk₃) der Spektralabschnitte (A₁, A₂, A₃) im k-Raum äquidistant zueinander liegen, wobei k die Kreiswellenzahl bezeichnet, wobei Zentren der lichtempfindlichen Oberflächen der Sensorelemente (54a, 54b, 54c) des Sensors (54) räumlich in Übereinstimmung mit den Zentren der Brennpunkte (78a, 78b, 78c), in die das Objektiv (50) Mediane (Mk₁, Mk₂, Mk₃), die im k-Raum äquidistant zueinander liegen, verschiedener Spektralbereiche (B₁, B₂, B₃) auf der Bildseite fokussiert, angeordnet sind.

8. System (10) für optische Kohärenztomografie(OCT), Folgendes umfassend:
ein spektroskopisches Instrument (38) nach einem der Ansprüche 1 bis 7,
eine Lichtquelle (14), die konfiguriert ist, kohärentes polychromatisches Licht (16) bereitzustellen,
einen Strahlteiler (18), der konfiguriert ist, das kohärente polychromatische Licht (16) in einen Referenzarm (24) und in einen Probenarm (28) zu koppeln, das Licht (22, 26), das von dem Referenzarm (24) und von dem Probenarm (28) zurückgestreut wurde, zum Bilden eines polychromatischen Lichtbündels (36) zu überlagern, und das polychromatische Lichtbündel (36) zum Zweck von Spektralanalyse in das spektroskopische Instrument (38) zu koppeln.

9. Spektralanalyseverfahren, die folgenden Schritte umfassend:
räumliches spektrales Teilen eines polychromatischen Lichtbündels (46), das auf eine erste optische Komponente (48) auftrifft,
wobei die erste optische Komponente (48) eine Winkeldispersion (dθ/dk) aufweist, in deren Fall ein Beugungswinkel (θ) des Lichtbündels (46a, 46c), das aus der ersten optischen Komponente (48) austritt, im Verhältnis zu dem Lichtbündel (46), das in die erste optische Komponente (48) eintritt, nichtlinear von der Kreiswellenzahl (k) abhängt,
Leiten mehrerer Spektralbereiche (B₁, B₂, B₃) des geteilten Lichtbündels (46a, 46b, 46c) in mehrere unterschiedliche räumliche Bereiche (52a, 52b, 52c) mittels eines Objektivs (50),
wobei das Objektiv (50) im Verhältnis zur ersten optischen Komponente (48) auf eine solche Weise angeordnet ist, dass die erste optische Komponente (48) im Zentrum einer Eingangspupille des Objektivs (50) lokalisiert ist, und
wobei das Objektiv (50) konfiguriert ist, das Lichtbündel (46a, 46b, 46c), das durch die erste optische Komponente geteilt wurde, auf eine solche Weise zu leiten, dass Mediane (Mk₁, Mk₂, Mk₃), die im k-Raum äquidistant zueinander liegen, verschiedener Spektralbereiche (B₁, B₂, B₃) in verschiedenen Brennpunkten (78a, 78b, 78c) fokussiert werden, deren Zentren im Konfigurationsraum äquidistant zueinander liegen, und
Registrieren einer oder mehrerer Intensitäten des geteilten Lichtbündels (46a, 46b, 46c) mittels eines Sensors (54), der dem Objektiv (50) nachfolgend im Bündelpfad des Lichtbündels (46a, 46b, 46c) angeordnet ist, mit mehreren lichtempfindlichen Sensorelementen (54a, 54b, 54c), wobei jedes Sensorelement (54a, 54b, 54c) konfiguriert ist, die Intensität eines Spektralabschnitts (A₁, A₂, A₃) des Lichtbündels (46) zu registrieren und die Mediane (Mk₁, Mk₂, Mk₃) der Spektralabschnitte (A₁, A₂, A₃) im k-Raum äquidistant zueinander liegen, wobei k die Kreiswellenzahl bezeichnet.

10. Spektralanalyseverfahren, die folgenden Schritte umfassend:
räumliches spektrales Teilen eines polychromatischen Lichtbündels (46), das auf eine erste optische Komponente (48) auftrifft,
wobei die erste optische Komponente (48) eine Winkeldispersion (dθ/dk) aufweist, in deren Fall ein Beugungswinkel (θ) des Lichtbündels (46a, 46c), das aus der ersten optischen Komponente (48) austritt, im Verhältnis zu dem Lichtbündel (46), das in die erste optische Komponente (48) eintritt, nichtlinear von der Kreiswellenzahl (k) abhängt,
Leiten mehrerer Spektralbereiche des geteilten Lichtbündels (46a, 46b, 46c) in mehrere unterschiedliche räumliche Bereiche (52a, 52b, 52c) mittels eines Objektivs (50),
wobei das Objektiv (50) solche Abbildungseigenschaften aufweist, dass das Lichtbündel (46a, 46b, 46c), das durch die erste optische Komponente (48) aufgeteilt wurde, von dem Objektiv (50) auf eine solche Weise geleitet wird, dass Mediane (Mk₁, Mk₂, Mk₃), die im k-Raum äquidistant zueinander liegen, verschiedener Spektralbereiche (B₁, B₂, B₃) in verschiedenen Brennpunkten (78a, 78b, 78c) fokussiert werden, deren Zentren im Konfigurationsraum auf nichtäquidistante Weise zueinander liegen, und
Registrieren einer oder mehrerer Intensitäten des geteilten Lichtbündels (46a, 46b, 46c) mittels eines Sensors (54), der dem Objektiv (50) nachfolgend im Bündelpfad des Lichtbündels (46a, 46b, 46c) angeordnet ist, mit mehreren lichtempfindlichen Sensorelementen (54a, 54b, 54c), wobei jedes Sensorelement (54a, 54b, 54c) konfiguriert ist, die Intensität eines Spektralabschnitts (A₁, A₂, A₃) des Lichtbündels (46) zu registrieren, und die Mediane (Mk₁, Mk₂, Mk₃) der Spektralabschnitte (A₁, A₂, A₃) im k-Raum äquidistant zueinander liegen, wobei k die Kreiswellenzahl bezeichnet, wobei Zentren der lichtempfindlichen Oberflächen der Sensorelemente (54a, 54b, 54c) des Sensors (54) räumlich in Übereinstimmung mit den Zentren der Brennpunkte (78a, 78b, 78c), in denen das Objektiv (50) Mediane (Mk₁, Mk₂, Mk₃)), die im k-Raum äquidistant zueinander liegen, verschiedener Spektralbereiche (B₁, B₂, B₃) auf der Bildseite fokussiert, angeordnet sind.

## Revendications

1. Instrument spectroscopique (38), comprenant :
un premier composant optique (48) configuré pour décomposer spatialement et spectralement un faisceau lumineux polychromatique (46) incident sur le premier composant optique (48),
dans lequel le premier composant optique (48) présente une dispersion angulaire (dθ/dk), qui est telle que un angle de diffraction (θ) du faisceau lumineux (46a, 46c) émanant du premier composant optique (48) par rapport au faisceau lumineux (46) pénétrant dans le premier composant optique (48) dépend non linéairement du nombre d'onde (k),
un objectif (50) configuré pour acheminer diverses régions spectrales (B₁, B₂, B₃) du faisceau lumineux décomposé (46a, 46b, 46c) sur des régions spatiales différentes (52a, 52b, 52c), dans lequel l'objectif (50) est agencé par rapport au premier composant optique (48) de telle manière que le premier composant optique (48) soit situé au centre d'une pupille d'entrée de l'objectif (50), et dans lequel l'objectif (50) est configuré pour acheminer le faisceau lumineux (46a, 46b, 46c) décomposé par le premier composant optique de telle manière que des médianes (Mk₁, Mk₂, Mk₃), situées à équidistance les unes des autres dans le k-espace, de diverses régions spectrales (B₁, B₂, B₃), soient focalisées sur des foyers différents (78a, 78b, 78c), dont les centres sont situés à équidistance les uns des autres dans l'espace de configuration, et
un capteur (54), situé en aval de l'objectif (50) dans le chemin de faisceau du faisceau lumineux décomposé (46a, 46b, 46c), avec une pluralité d'éléments détecteurs sensibles à la lumière (54a, 54b, 54c),
les éléments détecteurs (54a, 54b, 54c) étant agencés dans le chemin de faisceau du faisceau lumineux décomposé (46a, 46b, 46c), chaque élément détecteur (54a, 54b, 54c) étant configuré pour acquérir l'intensité d'un secteur spectral (A₁, A₂, A₃) du faisceau lumineux (46) et les médianes (Mk₁, Mk₂, Mk₃) des secteurs spectraux (A₁, A₂, A₃) sont situées à équidistance les unes des autres dans le k-espace, où k désigne le nombre d'onde.

2. Instrument spectroscopique (38) selon la revendication 1, dans lequel l'objectif (50) présente des propriétés de formation d'image chromatiques latérales.

3. Instrument spectroscopique (38) selon la revendication 1 ou 2, dans lequel l'objectif (50) est agencé par rapport au premier composant optique (48) de telle manière que le faisceau lumineux décomposé (46a, 46b, 46c) passe à travers l'objectif (50) sensiblement au-dessus d'un plan (82) dans lequel est situé un axe optique (80) de l'objectif (50).

4. Instrument spectroscopique (38) selon l'une des revendications 1 à 3, dans lequel l'objectif (50) est agencé par rapport au premier composant optique (48) de telle manière qu'un axe optique (80) de l'objectif (50) soit incliné par rapport à la direction de propagation **(k₂)** d'un train d'ondes du faisceau lumineux décomposé (46b) qui représente la médiane (Mk₂) de la totalité du spectre (66) du faisceau lumineux (46) dans le k-espace.

5. Instrument spectroscopique (38) selon l'une des revendications 1 à 4, dans lequel l'objectif (50) est configuré pour focaliser un pinceau de rayons sensiblement collimatés (46a, 46b, 46c) du faisceau lumineux décomposé (46) émanant du premier composant optique (48) du côté objet sur un foyer (78a, 78b, 78c) du côté image après passage à travers l'objectif (50), un espacement latéral (Dₐ, D_{c}) du foyer (78a, 78b, 78c) par rapport à un axe optique (80) de l'objectif (50) croissant linéairement avec l'angle d'incidence (δ₁, δ₃) avec un angle d'incidence croissant (δ₁, δ₃) sous lequel le pinceau de rayons (46a, 46c) est incident dans l'objectif (50) par rapport à l'axe optique (80) de l'objectif (50).

6. Instrument spectroscopique selon l'une des revendications précédentes, dans lequel les centres des surfaces sensibles à la lumière des éléments détecteurs du capteur sont agencés à équidistance les uns des autres.

7. Instrument spectroscopique (38), comprenant :
un premier composant optique (48) configuré pour décomposer spatialement et spectralement un faisceau lumineux polychromatique (46) incident sur le premier composant optique (48),
dans lequel le premier composant optique (48) présente une dispersion angulaire (dθ/dk), auquel cas un angle de diffraction (θ) du faisceau lumineux (46a, 46c) émanant du premier composant optique (48) par rapport au faisceau lumineux (46) pénétrant dans le premier composant optique (48) dépend non linéairement du nombre d'onde (k),
un objectif (50) configuré pour acheminer diverses régions spectrales (B₁, B₂, B₃) du faisceau lumineux décomposé (46a, 46b, 46c) sur des régions spatiales différentes (52a, 52b, 52c), dans lequel l'objectif (50) présente des propriétés de formation d'image telles que le faisceau lumineux (46a, 46b, 46c) décomposé par le premier composant optique (48) soit acheminé par l'objectif (50) de telle manière que des médianes (Mk₁, Mk₂, Mk₃), situées à équidistance les unes des autres dans le k-espace, de diverses régions spectrales (B₁, B₂, B₃), soient focalisées sur des foyers différents (78a, 78b, 78c), dont les centres sont situés de manière non équidistante les uns par rapport aux autres dans l'espace de configuration, et
un capteur (54), situé en aval de l'objectif (50) dans le chemin de faisceau du faisceau lumineux décomposé (46a, 46b, 46c), avec une pluralité d'éléments détecteurs sensibles à la lumière (54a, 54b, 54c),
les éléments détecteurs (54a, 54b, 54c) étant agencés dans le chemin de faisceau du faisceau lumineux décomposé (46a, 46b, 46c), chaque élément détecteur (54a, 54b, 54c) étant configuré pour acquérir l'intensité d'un secteur spectral (A₁, A₂, A₃) du faisceau lumineux (46) et les médianes (Mk₁, Mk₂, Mk₃) des secteurs spectraux (A₁, A₂, A₃) sont situées à équidistance les unes des autres dans le k-espace, où k désigne le nombre d'onde, dans lequel les centres des surfaces sensibles à la lumière des éléments détecteurs (54a, 54b, 54c) du capteur (54) sont agencés spatialement conformément aux centres des foyers (78a, 78b, 78c) sur lesquels l'objectif (50) focalise des médianes (Mk₁, Mk₂, Mk₃), situées à équidistance les unes des autres dans le k-espace, de diverses régions spectrales (B₁, B₂, B₃) du côté image.

8. Système (10) de tomographie par cohérence optique (OCT), comprenant :
un instrument spectroscopique (38) selon l'une des revendications 1 à 7,
une source lumineuse (14) configurée pour fournir une lumière polychromatique cohérente (16),
un diviseur de faisceau (18) configuré pour injecter la lumière polychromatique cohérente (16) dans un bras de référence (24) et dans un bras d'échantillon (28), afin de superposer la lumière (22, 26) rétrodiffusée par le bras de référence (24) et par le bras d'échantillon (28) de manière à former un faisceau lumineux polychromatique (36), et pour injecter le faisceau lumineux polychromatique (36) dans l'instrument spectroscopique (38) à des fins d'analyse spectrale.

9. Processus d'analyse spectrale, comprenant les étapes suivantes:
décomposer spatialement et spectralement un faisceau lumineux polychromatique (46) incident sur un premier composant optique (48),
dans lequel le premier composant optique (48) présente une dispersion angulaire (dθ/dk), auquel cas un angle de diffraction (θ) du faisceau lumineux (46a, 46c) émanant du premier composant optique (48) par rapport au faisceau lumineux (46) pénétrant dans le premier composant optique (48) dépend non linéairement du nombre d'onde (k),
acheminer une pluralité de régions spectrales (B₁, B₂, B₃) du faisceau lumineux décomposé (46a, 46b, 46c) sur une pluralité de régions spatiales différentes (52a, 52b, 52c) à l'aide d'un objectif (50),
dans lequel l'objectif (50) est agencé par rapport au premier composant optique (48) de telle manière que le premier composant optique (48) soit situé au centre d'une pupille d'entrée de l'objectif (50), et
dans lequel l'objectif (50) est configuré pour acheminer le faisceau lumineux (46a, 46b, 46c) décomposé par le premier composant optique de telle manière que des médianes (Mk₁, Mk₂, Mk₃), situées à équidistance les unes des autres dans le k-espace, de diverses régions spectrales (B₁, B₂, B₃) soient focalisées sur des foyers différents (78a, 78b, 78c), dont les centres sont situés à équidistance les uns des autres dans l'espace de configuration, et
acquérir une ou plusieurs intensités du faisceau lumineux décomposé (46a, 46b, 46c) à l'aide d'un capteur (54) agencé en aval de l'objectif (50) dans le chemin de faisceau du faisceau lumineux (46a, 46b, 46c) avec une pluralité d'éléments détecteurs sensibles à la lumière (54a, 54b, 54c), chaque élément détecteur (54a, 54b, 54c) étant configuré pour acquérir l'intensité d'un secteur spectral (A₁, A₂, A₃) du faisceau lumineux (46) et les médianes (Mk₁, Mk₂, Mk₃) des secteurs spectraux (A₁, A₂, A₃) sont situées à équidistance les unes des autres dans le k-espace, où k désigne le nombre d'onde.

10. Processus d'analyse spectrale, comprenant les étapes suivantes :
décomposer spatialement et spectralement un faisceau lumineux polychromatique (46) incident sur un premier composant optique (48),
dans lequel le premier composant optique (48) présente une dispersion angulaire (dθ/dk), auquel cas un angle de diffraction (θ) du faisceau lumineux (46a, 46c) émanant du premier composant optique (48) par rapport au faisceau lumineux (46) pénétrant dans le premier composant optique (48) dépend non linéairement du nombre d'onde (k),
acheminer une pluralité de régions spectrales du faisceau lumineux décomposé (46a, 46b, 46c) sur une pluralité de régions spatiales différentes (52a, 52b, 52c) à l'aide d'un objectif (50),
dans lequel l'objectif (50) présente des propriétés de formation d'image telles que le faisceau lumineux (46a, 46b, 46c) décomposé par le premier composant optique (48) soit acheminé par l'objectif (50) de telle manière que des médianes (Mk₁, Mk₂, Mk₃), situées à équidistance les unes des autres dans le k-espace, de diverses régions spectrales (B₁, B₂, B₃), soient focalisées sur des foyers différents (78a, 78b, 78c), dont les centres sont situés de manière non équidistante les uns par rapport aux autres dans l'espace de configuration, et acquérir une ou plusieurs intensités du faisceau lumineux décomposé (46a, 46b, 46c) à l'aide d'un capteur (54) agencé en aval de l'objectif (50) dans le chemin de faisceau du faisceau lumineux (46a, 46b, 46c) avec une pluralité d'éléments détecteurs sensibles à la lumière (54a, 54b, 54c), chaque élément détecteur (54a, (54a, 54b, 54c) étant configuré pour acquérir l'intensité d'un secteur spectral (A₁, A₂, A₃) du faisceau lumineux (46) et les médianes (Mk₁, Mk₂, Mk₃) des secteurs spectraux (A₁, A₂, A₃) sont situées à équidistance les unes des autres dans le k-espace, où k désigne le nombre d'onde,
dans lequel les centres des surfaces sensibles à la lumière des éléments détecteurs (54a, 54b, 54c) du capteur (54) sont agencés spatialement conformément aux centres des foyers (78a, 78b, 78c) sur lesquels l'objectif (50) focalise des médianes (Mk₁, Mk₂, Mk₃), situées à équidistance les unes des autres dans le k-espace, de diverses régions spectrales (B₁, B₂, B₃) du côté image.
